(19)

Europäisches
Patentamt
European
Patent Office
Office européen
des brevets

(11) **EP 4 432 501 A1**

(12) **EUROPEAN PATENT APPLICATION**

(43) Date of publication:
**18.09.2024 Bulletin 2024/38**

(21) Application number: **23168054.7**

(22) Date of filing: **14.04.2023**

(51) International Patent Classification (IPC):
**H02J 1/10** (2006.01)          **H02J 1/14** (2006.01)

(52) Cooperative Patent Classification (CPC):
**H02J 1/106; H02J 1/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2023 US 202363452389 P**

(71) Applicant: **Hitachi Energy Ltd**
**8050 Zürich (CH)**

(72) Inventors:
• **HAFIZ, Faeza**
**27502 Apex**
**Wake/NC (US)**
• **PITTO, Giovanni**
**16134 Genova (IT)**
• **TUCKEY, Andrew Mark**
**Livingstone, 0837 (AU)**

(74) Representative: **Vossius & Partner**
**Patentanwälte Rechtsanwälte mbB**
**Siebertstraße 3**
**81675 München (DE)**

(54) **SECONDARY CONTROL OF ENERGY SUPPLIES IN DC AND HYBRID MICROGRIDS**

(57)     Direct current (DC) microgrids and hybrid microgrids require controllers for both voltage control and load sharing. Disclosed embodiments are capable of simultaneously calculating values for both voltage control and load sharing, without requiring communication between energy supplies, and combining these values into a single setpoint. This enables the setpoint determination to be comprised in a single controller, which may be provided as a secondary controller which may provide the determined setpoint to a primary controller of each DC/DC converter of each energy supply.

**200**

**FIG. 2**

EP 4 432 501 A1

**Description**

**BACKGROUND**

Field of the Invention

The embodiments described herein are generally directed to control of an energy supply, and more particularly, to secondary control of energy supplies, such as battery energy storage systems, in direct current (DC) and hybrid microgrids.

Description of the Related Art

In the past, direct current (DC) microgrids were generally small systems, with sizes typically in the range of tens of kilowatts (kW). However, there has been a significant increase in the deployment of distributed energy resources with DC outputs. In addition, energy storage systems generally have an internal DC bus, and modern electronic loads generally require DC power. As a result, DC microgrids and hybrid microgrids, with both alternating current (AC) and DC buses, have grown in popularity.

The use of distributed energy supplies, such as battery energy storage systems (BESSs) and other constant power generators, in DC or hybrid microgrids, requires controllers for both voltage control and load sharing. As the size of the microgrid increases, there is a need for more comprehensive control structures. The present disclosure addresses this need, as well as other problems discovered by the inventors.

**SUMMARY**

One objective of certain disclosed embodiments is to provide both voltage control and load sharing using a single setpoint. As a further objective, disclosed embodiments may implement the voltage control and load sharing in a secondary controller that provides the setpoint to a primary controller. As yet another objective, the secondary controllers for different energy supplies may operate independently of each other.

In an embodiment, a method of controlling an energy supply comprises using a controller of the energy supply to: determine a voltage-control value based on a first error between a reference parameter of a bus to which the energy supply is electrically connected and a measured parameter of the bus; determine a load-share value based on a second error between a reference power of the energy supply and a measured power output by the energy supply; determine a setpoint based on the voltage-control value and the load-share value; and output the setpoint to control one or both of a voltage of the bus and a power output by the energy supply, according to the setpoint. The setpoint may be a voltage setpoint. The setpoint may be determined as a sum of the voltage-control value and the load-share value.

The voltage-control value may be a first voltage value, the reference parameter may be a reference voltage of the bus, and the measured parameter may be a measured voltage at the bus. The method may further comprise using the at least one controller to calculate the first error based on a difference between the reference voltage and the measured voltage. The first error may be further calculated based on an estimated voltage drop on an electrical line between the bus and the energy supply. The method may further comprise using the controller to estimate the voltage drop based on an estimated resistance on the electrical line and current output by the energy supply.

The load-share value may be a second voltage value, and the method may further comprise using the controller to convert the second error from a power value to a voltage value. The method may further comprise using the controller to calculate the second error based on a difference between the reference power and the measured power. The second error may be further calculated based on an estimated power loss on an electrical line between the bus and the energy supply. The second error may be converted from the power value to the voltage value based on a droop coefficient associated with a direct current (DC)/DC converter of the energy supply.

The method may further comprise using the controller to calculate the reference power as a proportion of a total load based on a nominal power of the energy supply relative to nominal power of one or more other energy supplies. The energy supply may be a battery energy storage system or a power generator. The controller may be a secondary controller, wherein the setpoint is output by the secondary controller to an input to a primary controller of the energy supply, and the method may further comprise using the primary controller to control the one or both of the voltage of the bus and the power output by the energy supply, based on the setpoint output by the secondary controller. The secondary controller may output the setpoint to a voltage control module of the primary controller.

In an embodiment, a controller for an energy supply is configured to: determine a voltage-control value based on a first error between a reference parameter of a bus to which the energy supply is electrically connected and a measured parameter of the bus; determine a load-share value based on a second error between a reference power of the energy supply and a measured power output by the energy supply; determine a setpoint based on the voltage-control value and the load-share value; and output the setpoint to control one or both of a voltage of the bus and a power output by the energy supply, according to the setpoint. The controller may be a secondary controller configured to output the setpoint to a voltage control module of a primary controller in a direct current (DC)/DC converter of the energy supply. The energy supply may be a battery energy storage system or power generator within a microgrid. The voltage-control value may be a first voltage value, the reference parameter may be a reference voltage of the bus, and the measured parameter may be a measured voltage at the bus. The first error may be calculated as a difference between a sum of the reference voltage with an estimated voltage drop on an electrical line between the bus and the energy supply, and the measured voltage. The load-share value may be a second voltage value. The second error may be calculated as a difference between a sum of the reference power with an estimated power loss on the electrical line, and the measured power. The controller may be further configured to convert the second error from a power value to a voltage value.

It should be understood that any of the features described above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied as software and/or hardware in one or more controllers.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates a one-line diagram of a hybrid microgrid, according to an example;
FIG. 2 illustrates a process for controlling an energy supply, according to an embodiment;
FIG. 3 illustrates a primary and secondary controller, according to an embodiment;
FIG. 4 illustrates an example of a processing device that may be used as or in a controller, according to an embodiment;
FIG. 5 illustrates a one-line diagram showing a sudden load change in a microgrid during an islanded condition, according to a simulated example;
FIGS. 6A and 6B illustrate power and voltage profiles, achieved in the simulated example by an embodiment; and
FIG. 7 illustrates load sharing between two battery energy storage systems, achieved in the simulated example by an embodiment.

## DETAILED DESCRIPTION

In an embodiment, systems and methods are disclosed for secondary control of an energy supply, such as a battery energy storage system (BESS), within a DC or hybrid microgrid. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

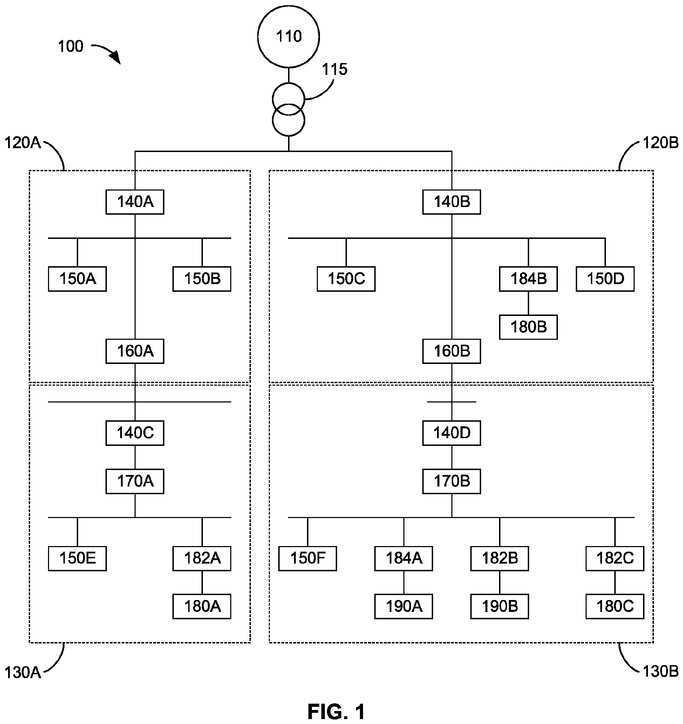

FIG. 1 illustrates a one-line diagram of a hybrid microgrid, according to an example. A hybrid microgrid 100 comprises a point of common coupling 110, for example, between a utility grid (not shown) and the distribution network of the hybrid microgrid 100, which may comprise one or more AC microgrids 120 and one or more DC microgrids 130. A transformer 115 may be positioned before or after point of common coupling 110 to transform electrical power from the high voltage used by the distribution network of the utility grid to a lower voltage used by hybrid microgrid 100. While two AC microgrids 120A and 120B and two DC microgrids 130A and 130B are illustrated in a particular arrangement, hybrid microgrid 100 may comprise any number of AC microgrids (e.g., one, three, four, etc.) and any number of DC microgrids (e.g., one, three, four, etc.) in any arrangement. In addition, it should be understood that disclosed embodiments may just as easily be applied to a single DC microgrid 130 or a set consisting of multiple DC microgrids 130, instead of a hybrid microgrid 100.

Hybrid microgrid 100 may comprise a breaker 140 at one or more points within the distribution network. Thus, various portions of the distribution network may be isolated by tripping the breaker(s) 140. For example, AC microgrid 120A comprises breaker 140A between its distribution network and point of common coupling 110, and AC microgrid 120B comprises breaker 140B between its distribution network and point of common coupling 110. In addition, DC microgrid 130A comprises breaker 140C between a pair of DC buses, and DC microgrid 130B comprises breaker 140D between a pair of DC buses.

Each AC microgrid 120 and DC microgrid 130 may service one or more loads 150, including critical and/or auxiliary loads. For example, AC microgrid 120A services load 150A and 150B on an AC bus, AC microgrid 120B services loads 150C and 150D on an AC bus, DC microgrid 130A services load 150E on a DC bus, and DC microgrid 130B services load 150F on a DC bus.

An AC/DC converter 160 may be provided at the coupling point between an AC microgrid 120 and a DC microgrid 130, to convert AC power from the AC microgrid 120 into DC power in the DC microgrid 130, and to convert DC power in the DC microgrid 130 into AC power in the AC microgrid 120. For example, AC/DC converter 160A is provided between the AC bus of AC microgrid 120A and the DC bus of DC microgrid 130A, and AC/DC converter 160B is provided between the AC bus of AC microgrid 120B and the DC bus of DC microgrid 130B.

A DC microgrid 130 may comprise a DC/DC converter or solid-state transformer 170 between DC buses of differing voltages. For example, DC microgrid 130A comprises solid-state transformer 170A between a pair of DC buses, and DC microgrid 130B comprises solid-state transformer 170B between a pair of DC buses.

Hybrid microgrid 100 may comprise one or more constant energy supplies 180. Constant energy supplies 180 may include, without limitation, a battery energy storage system (BESS), a power generator, or any other component capable of supplying constant electrical power into the distribution network. Typically, each energy supply 180 will output DC power. For an energy supply 180 that outputs DC power to a DC bus, a DC/DC converter 182 may be provided between the energy supply 180 and the DC bus, to regulate voltage on the DC bus. For example, energy supply 180A outputs DC power to DC/DC converter 182A in DC microgrid 130A, and energy supply 180C outputs DC power to DC/DC converter 182C in DC microgrid 130B. For an energy supply 180 that outputs DC power to an AC bus, an AC/DC converter 184 may be provided between the energy supply 180 and the AC bus, to convert the DC power, output by the energy supply 180, to AC power. For example, energy supply 180B outputs DC power to AC/DC converter 184B in AC microgrid 120B.

Hybrid microgrid 100 may also comprise one or more non-constant energy supplies 190, which may be power generators that rely on renewable energy. Non-constant energy supplies 190 may include, without limitation, wind power (e.g., generated by wind turbines), solar power (e.g., generated by photovoltaic cells), wave power (e.g., generated by a wave energy converter), or any other component whose capability to supply electrical power into the distribution network relies on a source of energy that varies and is not constant. For example, energy supply 190A may be a wind power generator that outputs AC power to AC/DC converter 184A in DC microgrid 130B, and energy supply 190B may be a solar power generator that outputs DC power to DC/DC converter 182B in DC microgrid 130B.

Again, it should be understood that hybrid microgrid 100, as illustrated in FIG. 1, is one non-limiting example. In practice, a hybrid microgrid 100 may comprise any number and arrangement of AC microgrids 120, DC microgrids 130, breakers 140, loads 150, AC/DC converters 160, DC/DC converters or solid-state transformers 170, constant energy supplies 180, and non-constant energy supplies 190. It should also be understood that any energy supply 180 or 190 may output power to a DC/DC converter 182, AC/DC converter 184, or AC/AC converter (not shown), depending on whether it is outputting AC or DC power and whether it is outputting power to an AC or DC bus. Of particular relevance to the present disclosure, a DC/DC converter 182 at the output of a constant energy supply 180 may be controlled by a controller to regulate the voltage and/or power on the DC bus.

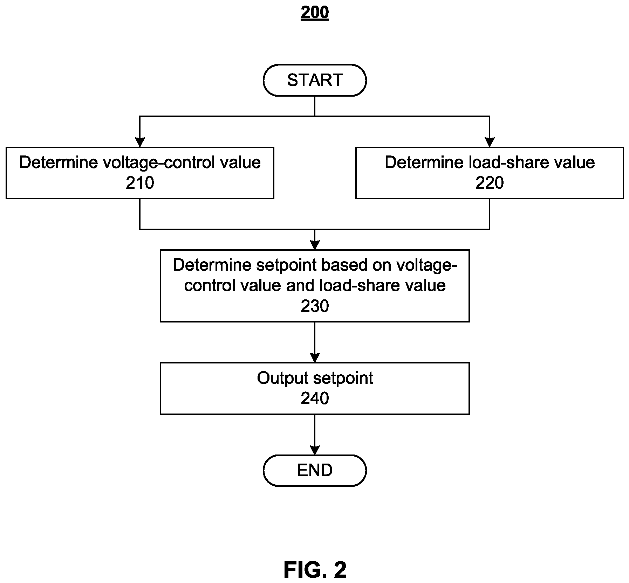

FIG. 2 illustrates a process 200 for controlling an energy supply 180, according to an embodiment. Process 200 may be implemented as software, hardware, or a combination of software and hardware, in a controller of a DC/DC converter 182 that regulates voltage and/or power of an energy supply 180 that outputs DC power. Process 200 may be used to determine a setpoint that is used to control the voltage of the bus to which energy supply 180 provides power and/or to control the power output by energy supply 180. Process 200 may be executed repeatedly and iteratively, to continuously adjust the setpoint in real time, for as long as DC/DC converter 182 is being controlled. It should be understood that these continuous real-time executions of process 200 may be performed by each controller of each DC/DC converter 182 that is regulating power output by an energy supply 180, independently of the controllers of other DC/DC converters 182 that are regulating the power output by other energy supplies 180.

While process 200 is illustrated with a certain arrangement and ordering of subprocesses, process 200 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

In subprocess 210, a voltage-control value is determined. In an embodiment, the voltage-control value is determined based on a first error between a reference parameter of a bus to which energy supply 180 is electrically connected and a measured parameter of the bus. The reference parameter may be a reference voltage of the bus, and the measured parameter may be a measured voltage of the bus, such that the voltage-control value is a first voltage value. For example, the voltage-control value may be calculated as:

Equation (1):

$$V_1 = \left( K_{p1} V_{err1} + K_{I1} \int V_{err1} \right)$$

wherein $V_1$ is the voltage-control value, $V_{err1}$ is the first error, $K_{p1}$ is a first proportional gain for the proportional control in a first proportional integral (PI) controller of DC/DC converter 182, and $K_{I1}$ is a first integral gain for the integral control in the first PI controller of DC/DC converter 182. Gains $K_{p1}$ and $K_{I1}$ may be constants that are determined in any known manner for the first PI controller.

In an embodiment, the first error $V_{err1}$ may be calculated based on a difference between the reference voltage and the measured voltage of the bus. In addition, the first error $V_{err1}$ may be calculated based on an estimated voltage drop on an electrical line between the bus and energy supply 180. For example, first error $V_{err1}$ may be calculated as:

Equation (2):

$$V_{err1} = V_{ref} + V_{line\_drop} - V_{meas}$$

wherein $V_{ref}$ is the reference voltage of the bus, $V_{line-drop}$ is the estimated voltage drop on the electrical line between the bus and energy supply 180, and $V_{meas}$ is the measured voltage at the bus.

The voltage drop $V_{line\_drop}$ may be estimated in any known manner. For example, if the resistance on the electrical line is estimated or known, the voltage drop $V_{line\_drop}$ may be estimated as the product of the estimated resistance on the electrical line and the current that is output by energy supply 180. The addition of the voltage drop $V_{line\_drop}$ to the reference voltage $V_{ref}$, during calculation of the first error, may result in improved voltage control.

In subprocess 220, a load-share value is determined. In an embodiment, the load-share value is determined based on a second error between a reference power of energy supply 180 and a measured power output by energy supply 180. The load-share value may be a second voltage value. For example, the load-share value may be calculated as:

Equation (3):

$$V_2 = \left( K_{p2} V_{err2} + K_{I2} \int V_{err2} \right)$$

wherein $V_2$ is the load-share value, $V_{err2}$ is the second error, $K_{p2}$ is a second proportional gain for the proportional control in a second PI controller of DC/DC converter 182, and $K_{I2}$ is a second integral gain for the integral control in the second PI controller of DC/DC converter 182. Gains $K_{p2}$ and $K_{I2}$ may be constants that are determined in any known manner for the second PI controller.

In an embodiment, the second error $V_{err2}$ may be calculated based on a difference between the reference power and the measured power that is output by energy supply 180. In addition, the second error $V_{err2}$ may be calculated based on an estimated power loss on an electrical line between the bus and energy supply 180. For example, the second error $V_{err2}$ may be calculated as:

Equation (4):

$$V_{err2} = P2V * P_{err}$$

Equation (5):

$$P2V = \frac{\Delta V_{max}}{P_{nom}}$$

Equation (6):

$$P_{err} = P_{ref} + P_{line\_loss} - P_{meas}$$

wherein $\Delta V_{max}$ is the maximum voltage deviation that is allowed, $P_{nom}$ is the nominal power capacity of energy supply 180, $P_{ref}$ is the reference power, $P_{line\_loss}$ is the estimated power loss on the electrical line between the bus and energy supply 180, and $P_{meas}$ is the measured power output by energy supply 180.

Notably, $P2V$ represents the droop coefficient associated with the controller of DC/DC converter 182. It is assumed that the control of energy supply 180 is based on voltage droop (i.e., the terminal voltage drops in proportion to the load on energy supply 180). $P_{err}$ represents an error between the reference power and the measured power, while accounting for the estimated power loss. The droop coefficient P2V converts the error $P_{err}$, which is a power value, to the second error $V_{err2}$, which is a voltage value.

The power loss $P_{line\_loss}$ may be estimated in any known manner. For example, if the resistance on the electrical line is estimated or known, the power loss $P_{line\_loss}$ may be estimated based on the estimated resistance on the electrical line and the current that is output by energy supply 180. The addition of the power loss $P_{line\_loss}$ to the reference power $P_{ref}$ during calculation of the second error compensates the amount of power delivered to the bus for the power loss $P_{line\_loss}$ experienced between the bus and energy supply 180.

The reference power $P_{ref}$ for a given energy supply 180 may be calculated as:

Equation (7):

$$P_{ref} = \frac{P_{nom}}{\sum_{i=1}^{n} P_{nom}^{i}} * P_{load}$$

wherein n is the total number of energy supplies 180 that output power to the bus, such that $\sum_{i=1}^{n} P_{nom}^{i}$ represents the sum of the nominal power capacity of all energy supplies 180 that output power to the bus, and $P_{load}$ is the total load to be injected into the bus by all energy supplies 180 that output power to the bus.

Notably, $P_{ref}$ represents a proportion of the total load $P_{load}$ that should be borne by the energy supply 180 connected to the DC/DC converter 182 being controlled, based on the nominal power capacity of the energy supply 180 relative to all available energy supplies 180. In other words, the reference power $P_{ref}$ is calculated as a proportion of a total load based on a nominal power of energy supply 180 relative to nominal power of all energy supplies 180, including the energy supply 180 and potentially one or more other energy supplies 180. Thus, the reference power $P_{ref}$ incorporates load sharing into the setpoint determination for each individual energy supply 180.

In subprocess 230, the setpoint is determined, based on the voltage-control value (e.g., $V_1$) determined in subprocess 210, and the load-share value (e.g., $V_2$) determined in subprocess 220. It should be understood that subprocesses 210 and 220 may be performed in parallel, since one does not necessarily depend on the other. In an embodiment, the setpoint may be calculated as the sum of voltage-control value $V_1$ and load-share value $V_2$:

Equation (8):

$$V_{set} = V_1 + V_2$$

wherein $V_{set}$ is the setpoint. Notably, the setpoint $V_{set}$ incorporates both voltage control, as implemented by voltage-control value $V_1$, and load sharing, as implemented by load-share value $V_2$, into a single setpoint value. In an embodiment, voltage-control value $V_1$ and load-share value $V_2$ are both voltage values, such that setpoint $V_{set}$ is also a voltage value.

In subprocess 240, the setpoint (e.g., $V_{set}$), determined in subprocess 230, is output to control one or both of a voltage of the bus and the power output by energy supply 180, according to the setpoint. In an embodiment, process 200 is performed by a secondary controller, in which case, the setpoint may be output by the secondary controller to an input to a primary controller of energy supply 180. For example, the setpoint may be input to a voltage control module of the primary controller. The primary controller may then control the voltage of the bus that is output by energy supply 180, based on the setpoint that is output by the secondary controller.

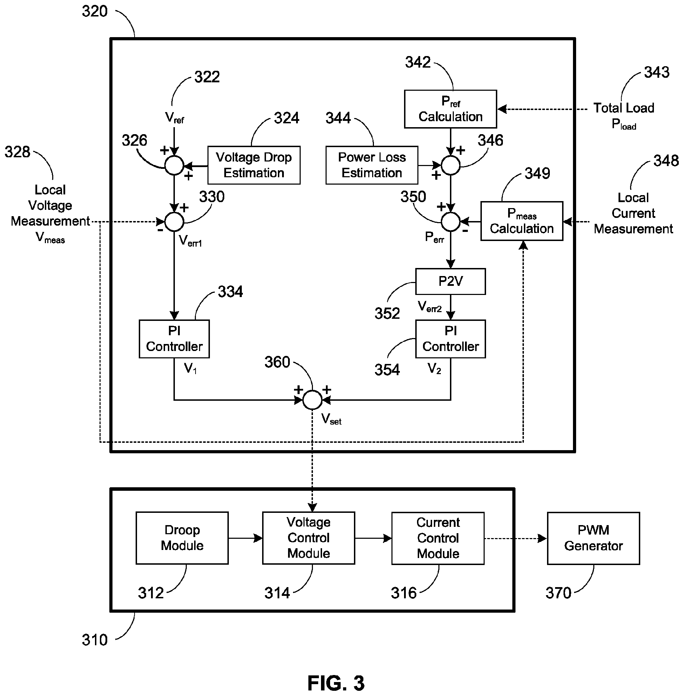

FIG. 3 illustrates a primary controller 310 and secondary controller 320, according to an embodiment. Primary controller 310 and/or secondary controller 320 may be implemented as software, hardware, or a combination of software and hardware, with some functions performed by software and other functions performed by hardware. In embodiments in which software is used to perform one or more of the described functions, software instructions and/or other data may be loaded into main memory and executed by one or more hardware processors. In embodiments in which hardware is used to perform one or more of the described functions, the functions may be implemented as special-purpose processor, integrated circuit (IC), application-specific integrated circuit (ASIC), digital signal processor (DSP), field-programmable gate array (FPGA) or other programmable logic device, discrete gate or transistor logic, and/or the like.

To clearly illustrate the interchangeability of hardware and software, the various components will be described in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the disclosure. In addition, the grouping of functions within a component is for ease of description. Specific functions can be moved from one component to another without departing from the scope of the disclosure.

Secondary controller 320 may maintain reference parameter 322, for example, in persistent memory. Reference parameter 322 may be a constant value, such as the reference voltage $V_{ref}$ of the bus. In addition, secondary controller 320 may comprise a voltage drop estimation unit 324 that estimates the voltage drop $V_{line\_drop}$, for example, based on estimated resistance and measured current (e.g., local current measurement 348) on the electrical line. Reference parameter 322 and the voltage drop $V_{line\_drop}$, estimated by voltage drop estimation unit 324, are summed by a summer 326. It should be understood that summer 326 corresponds to $V_{ref} + V_{line\_drop}$ in Equation (2), as performed in subprocess 210.

Secondary controller 320 may receive a local voltage measurement 328 as an input. Local voltage measurement 328 corresponds to the measured voltage $V_{meas}$. Local voltage measurement 328 is subtracted from the output of summer 326 by subtractor 330. It should be understood that subtractor 330 corresponds to $-V_{meas}$ in Equation (2), as performed in subprocess 210. Thus, the output of subtractor 330 is the first error $V_{err1}$.

Secondary controller 320 may comprise a first PI controller 334 that receives the first error $V_{err1}$ as input from subtractor 330. First PI controller 334 may store or otherwise derive values for gains $K_{p1}$ and $K_{I1}$. First PI controller 334 may utilize gains $K_{p1}$ and $K_{I1}$, in combination with the first error $V_{err1}$, to calculate the voltage-control value $V_1$, according to Equation (1), as performed in subprocess 210. First PI controller 334 outputs the calculated voltage-control value $V_1$ to summer 360.

Secondary controller 320 may comprise a reference power calculation unit 342 that calculates the reference power $P_{ref}$. Reference power calculation unit 342 may store or otherwise derive values of nominal power capacities $P_{nom}$ for all available energy supplies 180, or a nominal power ratio of the nominal power capacity of the controlled energy supply 180 to the summed nominal power capacities of all available energy supplies 180. Secondary controller may receive the total load 343, representing $P_{load}$, as an input. Reference power calculation unit 342 may utilize total load 343, in combination with the nominal power capacities $P_{nom}$ or the nominal power ratio, to calculate the reference power $P_{ref}$, according to Equation (7), as performed in subprocess 220.

Secondary controller 320 may comprise a power loss estimation unit 344 that estimates the power loss $P_{line\_loss}$, for example, based on estimated resistance and measured current (e.g., local current measurement 348) on the electrical line. The reference power $P_{ref}$, calculated by reference power calculation unit 342, and the power loss $P_{line\_loss}$, estimated by power loss estimation unit 344, are summed by a summer 346. It should be understood that summer 346 corresponds to $P_{ref} + P_{line\_loss}$ in Equation (6), as performed in subprocess 220.

Secondary controller 320 may receive a local current measurement 348 as an input. Secondary controller 320 may comprise a measured power calculation unit 349 that calculates the measured power $P_{meas}$ based on local voltage measurement 328 and local current measurement 348 (e.g., as a product of local voltage measurement 328 and local current measurement 348). The measured power $P_{meas}$, calculated by measured power calculation unit 349, is subtracted from the output of summer 346 by subtractor 350. It should be understood that subtractor 350 corresponds to $-P_{meas}$ in Equation (6), as performed in subprocess 220. Thus, the output of subtractor 350 is the power error $P_{err}$.

Secondary controller 320 may comprise power-to-voltage converter 352. Power-to-voltage converter 352 converts the power error $P_{err}$, output by subtractor 350, into second error $V_{err2}$. In particular, power-to-voltage converter 352 may multiple the power error $P_{err}$ by the droop coefficient. It should be understood that power-to-voltage converter 352 corresponds to Equations (4) and (5), as performed in subprocess 220.

Secondary controller 320 may comprise a second PI controller 354 that receives the second error $V_{err2}$ as input from power-to-voltage converter 352. Second PI controller 354 may store or otherwise derive values for gains $K_{p2}$ and $K_{I2}$. Second PI controller 354 may utilize gains $K_{p2}$ and $K_{I2}$, in combination with the second error $V_{err2}$, to calculate the load-share value $V_2$, according to Equation (3), as performed in subprocess 220. Second PI controller 354 outputs the calculated load-share value $V_2$ to summer 360.

Summer 360 of secondary controller 320 may sum the voltage-control value $V_1$ with the load-share value $V_2$ to determine the setpoint $V_{set}$. It should be understood that summer 360 corresponds to Equation (8), as performed by subprocess 230.

Secondary controller 320 may operate continuously on real-time inputs from the bus. These real-time inputs may comprise or consist of local voltage measurement 328, total load 343, and local current measurement 348. As these inputs are received, the setpoint $V_{set}$ is continuously calculated to provide real-time adjustments to the voltage control and load sharing of each DC/DC converter 182 for each energy supply 180.

Thus, secondary controller 320 provides a continuous feedback loop for voltage control and load sharing within a DC microgrid 130 or hybrid microgrid 100. In particular, based on the real-time inputs, voltage-control value $V_1$ will be calculated by PI controller 334 to minimize first error $V_{err1}$, and voltage-control value $V_2$ will be calculated by PI controller 354 to minimize second error $V_{err2}$. Consequently, the setpoint $V_{set}$ will be continuously adjusted to minimize these errors $V_{err1}$ and $V_{err2}$.

The setpoint $V_{set}$, output by summer 360, may be input to a primary controller 310. In particular, the setpoint $V_{set}$ may be input to a voltage control module 314 of primary controller 310. It should be understood that the setpoint $V_{set}$, output by a particular secondary controller 320 for a DC/DC converter 182 for one energy supply 180, may be different from the setpoint $V_{set}$, output by another secondary controller 320 for a DC/DC converter 182 for another energy supply 180. In other words, each secondary controller 320 operates independently from other secondary controllers 320, except to the extent that they may rely on one or more common inputs.

Primary controller 310 may comprise a droop module 312, voltage control module 314, and current control module 316. Droop module 312 may provide droop information to voltage control module 314, which may utilize the droop information and the setpoint $V_{set}$, received from secondary controller 320, to provide voltage control information to current control module 316. Current control module 316 may utilize this voltage control information to provide an output to a pulse-width modulation (PWM) generator 370. PWM generator 370 may control the voltage and current fed to the bus by the energy supply 180 with which primary controller 310 is associated.

Secondary controller 320 is illustrated as being separate and distinct from primary controller 310. Such an embodiment enables the setpoint calculation to be modular, since the secondary controller 320 may be swapped in and out as needed (e.g., for replacement, updates, upgrades, etc.). The separation of functions in this manner also helps to avoid unmeasured disturbances in the microgrid. However, in an alternative embodiment, secondary controller 320 may be integrated into primary controller 310. For example, one or more, and potentially all, of the functions, described above with respect to secondary controller 320, may instead be integrated into primary controller 310 (e.g., into voltage control module 314) in a non-modular manner. Accordingly, the use of separate controllers 310 and 320 should not be understood as a limitation of any embodiment, unless explicitly stated as a requirement of a particular embodiment.

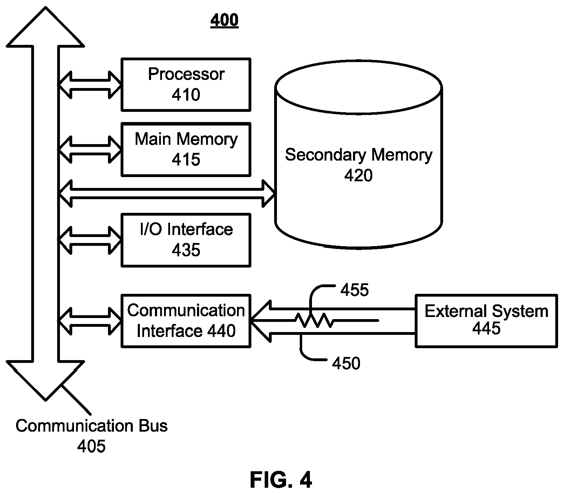

FIG. 4 illustrates an example of a processing device 400 that may be used as or in a controller, according to an embodiment. Processing device 400 may be used as primary controller 310 and/or secondary controller 320, or as one or more components of primary controller 310 and/or secondary controller 320.

Processing device 400 comprises one or more hardware processors 410. Processor(s) 410 may comprise a central processing unit (CPU). Processor(s) 410 could also comprise one or more auxiliary processors, such as a graphics processing unit (GPU), a processor to manage input/output (I/O), a processor to perform floating-point mathematical operations, a special-purpose microprocessor having an architecture suitable for fast execution of signal-processing algorithms (e.g., digital-signal processor), a secondary processor subordinate to a primary processor, an additional microprocessor or controller for dual or multiple processor systems, and/or a coprocessor. Such auxiliary processors may be discrete processors or may be integrated with a main processor 410. Examples of processors which may be used with processing device 400 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Each processor 410 may be connected to a communication bus 405. Communication bus 405 may include a data channel for facilitating information transfer between storage and other peripheral components of processing device 400. Furthermore, communication bus 405 may provide a set of signals used for communication with processor(s) 410, including a data bus, address bus, and/or control bus (not shown). Communication bus 405 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

Processing device 400 may comprise a main memory 415 and, optionally, a secondary memory 420. Main memory 415 provides storage of instructions and data for software executing on processor 410, such as those implementing one or more of the functions and/or modules discussed herein. It should be understood that programs stored in the memory and executed by processor 410 may be written and/or compiled according to any suitable language, including without limitation C/C++, Java, JavaScript, Perl, Visual Basic, .NET, and the like. Main memory 415 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 420 is a non-transitory computer-readable medium having software, including computer-executable code and/or other data, stored thereon. The software stored on secondary memory 420 is read into main memory 415, and the computer-executable code in main memory 415 is executed by processor(s) 410. Secondary memory 420 may include, for example, semiconductor-based memory, such as programmable read-only memory (PROM), erasable programmable read-only memory (EPROM), electrically erasable read-only memory (EEPROM), and flash memory (block-oriented memory similar to EEPROM).

Processing device 400 may comprise an I/O interface 435. I/O interface 435 provides an interface between one or more components of processing device 400 and one or more input and/or output devices. For example, in secondary controller 320, I/O interface 435 may receive local voltage measurement 328, total load 343, and/or local current measurement 348 from one or more sensors in a microgrid, and/or output the setpoint $V_{set}$ to primary controller 310. As another example, in primary controller 310, I/O interface 435 may receive the setpoint $V_{set}$ from secondary controller 320, and/or output a signal to PWM generator 370.

Processing device 400 may optionally comprise a communication interface 440. Communication interface 440 allows software, including instructions and/or data, to be transferred between processing device 400 and an external system 445. For example, software, including instructions and/or data, may be transferred to processing device 400, over one or more networks, from a network server via communication interface 440. Any of the inputs and/or outputs, described above with respect to I/O interface 435, could instead be communicated via communication interface 440. Examples of communication interface 440 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing processing device 400 with a network or another processing device. Communication interface 440 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software transferred via communication interface 440 is generally in the form of electrical communication signals 455. Signals 455 may be provided to communication interface 440 via a communication channel 450. In an embodiment, communication channel 450 may be a wired or wireless communication link, potentially including a communication network. Communication channel 450 carries signals 455 and can be implemented using a variety of wired or wireless communication means, including wire or cable, fiber optics, conventional phone line, cellular phone link, wireless data communication link, radio frequency ("RF") link, infrared link, or the like.

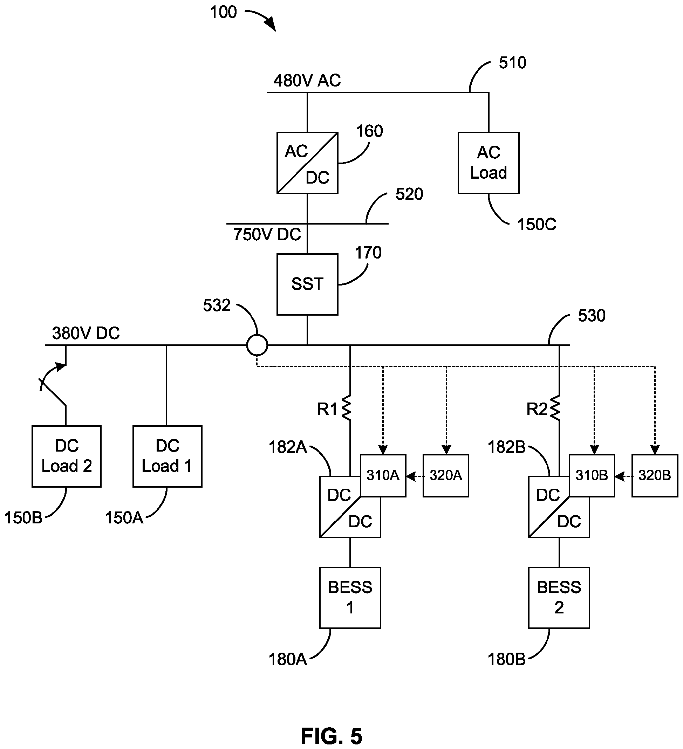

FIG. 5 illustrates a one-line diagram showing a sudden load change in a hybrid microgrid during an islanded condition, according to a simulated example. In the illustrated example, hybrid microgrid 100 comprises an AC bus 510 connected to an AC load 150C. A DC bus 520 is connected to AC bus 510 via AC/DC converter 160, and is connected to DC bus 530 via DC/DC converter or solid-state transformer 170. AC bus 510 has a reference voltage of 480 volts (V), DC bus 520 has a reference voltage of 750V, and DC bus 530 has a reference voltage $V_{ref}$ of 380V. The reference voltages of each bus 510, 520, and 530 should be fixed (i.e., isochronous). In this example, it is assumed that hybrid microgrid 100 is islanded from the utility grid.

DC bus 530 services a first DC load 150A and a second DC load 150B. DC bus 530 comprises a first battery energy storage system 180A, which is connected to DC bus 530 via a first DC/DC converter 182A, and a second battery energy storage system 180B, which is connected to DC bus 530 via a second DC/DC converter 182B. The electrical line between first battery energy storage system 180A and DC bus 530 has a first resistance R1, and the electrical line between second battery energy storage system 180B and DC bus 530 has a second resistance R2.

First DC/DC converter 182A is controlled by primary controller 310A, for which the setpoint $V_{set}$ is determined by secondary controller 320A. Similarly, second DC/DC converter 182B is controlled by primary controller 310B, for which the setpoint $V_{set}$ is determined by secondary controller 320B. Each primary controller 310A and 310B and/or each secondary controller 320A and 320B may receive the output of one or more sensors 532 on DC bus 530. Sensor(s) 532 may comprise a voltage sensor, current sensor, load sensor, and/or the like. For example, sensors 532 may output local voltage measurement 328, local current measurement 348, and/or total load 343, in real time, to secondary controllers 320A and 320B, which may each utilize these sensor outputs for independent, real-time adjustments of their respective setpoints $V_{set}$. In addition, secondary controller 310A may utilize the line resistance R1 in voltage drop estimation unit 324 to calculate the voltage drop $V_{line\_drop}$, and in power loss estimation unit 344 to calculate the power loss $P_{line\_loss}$. Similarly, secondary controller 310B may utilize the line resistance R2 in voltage drop estimation unit 324 to calculate the voltage drop $V_{line\_drop}$, and in power loss estimation unit 344 to calculate the power loss $P_{line\_loss}$.

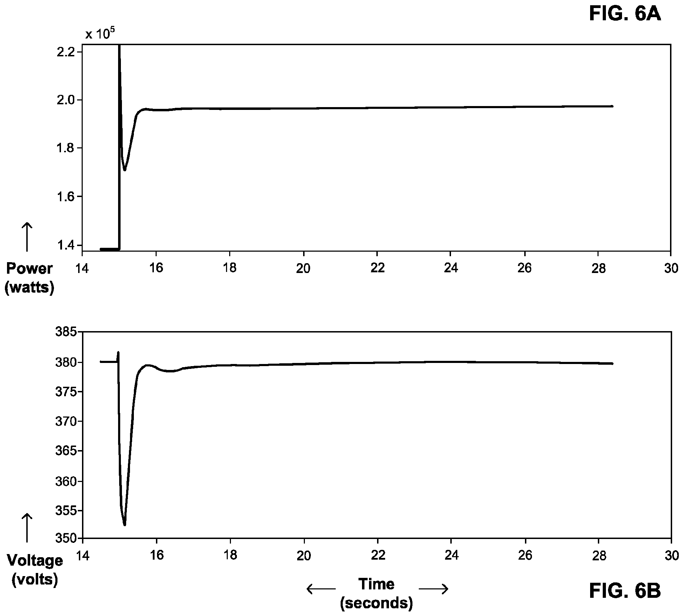

FIGS. 6A and 6B illustrate power and voltage profiles, achieved by an embodiment, using the example hybrid microgrid 100 illustrated in FIG. 5. For this simulation, first DC load 150A is connected to DC bus 530 from the start of the simulation, and second DC load 150B is suddenly connected to DC bus 530 after fifteen seconds from the start of the simulation via operation of a switch. Second DC load 150B is 60 kW. As illustrated, the voltage on DC bus 530 is close to the reference voltage of 380V by the twenty-two-second mark. Accordingly, the disclosed embodiments achieve appropriate voltage control.

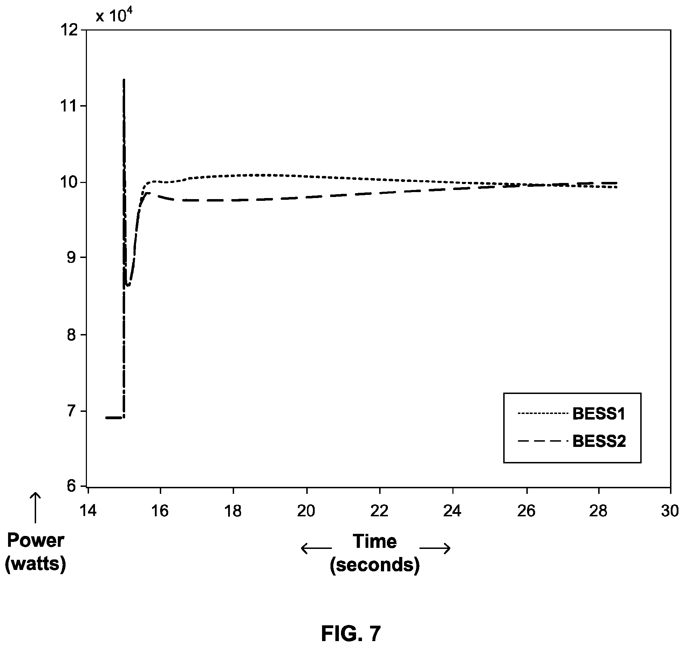

FIG. 7 illustrates load sharing between two battery energy storage systems, achieved by an embodiment, using the example hybrid microgrid 100 illustrated in FIG. 5, in the same simulation as depicted in FIGS. 6A and 6B. As illustrated, the load share is maintained between first battery energy storage system 180A and second battery energy storage system 180B. Accordingly, the disclosed embodiments achieve appropriate load sharing.

Moreover, as a result of the independent calculation of load-share value $V_2$ in each secondary controller 320A and 320B, the load share is maintained without requiring any communications between first battery energy storage system 180A and second battery energy storage system 180B. In other words, each secondary controller 320 can operate independently from other secondary controllers 320, without having to communicate with other secondary controllers 320, to achieve voltage control and load sharing.

Two important control elements in DC microgrids 130 and hybrid microgrids 100 are voltage control of the buses, and load sharing between energy supplies 180. As discussed above, disclosed embodiments are capable of achieving both voltage control and load sharing with the use of a single setpoint $V_{set}$, determined based on (e.g., by summing) a voltage-control value $V_1$ and a load-share value $V_2$, which may be calculated simultaneously on parallel paths (e.g., within secondary controller 320) and summed together (e.g., in subprocess 230, by summer 360).

In addition, the voltage-control value $V_1$ may be calculated using the estimated voltage drop $V_{line\_drop}$, and/or the load-share value $V_2$ may be calculated using the estimated power loss $P_{line\_loss}$. This may improve the transient performance of the combined voltage control and load sharing.

The disclosed embodiments have been primarily described herein with respect to a DC microgrid 130 or hybrid microgrid 100. However, the disclosed embodiments may be utilized in any system in which a constant energy supply is subject to voltage control and load sharing. Typical use cases for the disclosed embodiments, include, without limitation, data centers, electric vehicle (EV) charging stations, battery augmentation in storage plants, and the like. The disclosed embodiments may also be used in nested or coordinated DC microgrids 130.

Example embodiments include, without limitation:

Embodiment 1: A method of controlling an energy supply, the method comprising using a controller of the energy supply to: determine a voltage-control value based on a first error between a reference parameter of a bus to which the energy supply is electrically connected and a measured parameter of the bus; determine a load-share value based on a second error between a reference power of the energy supply and a measured power output by the energy supply; determine a setpoint based on the voltage-control value and the load-share value; and output the setpoint to control one or both of a voltage of the bus and a power output by the energy supply, according to the setpoint.

Embodiment 2: The method of Embodiment 1, wherein the voltage-control value is a first voltage value, the reference parameter is a reference voltage of the bus, and the measured parameter is a measured voltage at the bus.

Embodiment 3: The method of Embodiment 2, further comprising using the at least one controller to calculate the first error based on a difference between the reference voltage and the measured voltage.

Embodiment 4: The method of Embodiment 3, wherein the first error is further calculated based on an estimated voltage drop on an electrical line between the bus and the energy supply.

Embodiment 5: The method of Embodiment 4, further comprising using the controller to estimate the voltage drop based on an estimated resistance on the electrical line and a current output by the energy supply.

Embodiment 6: The method of any one of Embodiments 1 through 5, wherein the load-share value is a second voltage value, and wherein the method further comprises using the controller to convert the second error from a power value to a voltage value.

Embodiment 7: The method of Embodiment 6, further comprising using the controller to calculate the second error based on a difference between the reference power and the measured power.

Embodiment 8: The method of Embodiment 7, wherein the second error is further calculated based on an estimated power loss on an electrical line between the bus and the energy supply.

Embodiment 9: The method of any one of Embodiments 6 through 8, wherein the second error is converted from the power value to the voltage value based on a droop coefficient associated with a direct current (DC)/DC converter of the energy supply.

Embodiment 10: The method of any one of Embodiments 1 through 9, wherein the setpoint is a voltage setpoint.

Embodiment 11: The method of any one of Embodiments 1 through 10, wherein the setpoint is determined as a sum of the voltage-control value and the load-share value.

Embodiment 12: The method of any one of Embodiments 1 through 11, further comprising using the controller to calculate the reference power as a proportion of a total load based on a nominal power of the energy supply relative to nominal power of one or more other energy supplies.

Embodiment 13: The method of any one of Embodiments 1 through 12, wherein the energy supply is a battery energy storage system.

Embodiment 14: The method of any one of Embodiments 1 through 13, wherein the energy supply is a power generator.

Embodiment 15: The method of any one of Embodiments 1 through 14, wherein the controller is a secondary controller, wherein the setpoint is output by the secondary controller to an input to a primary controller of the energy supply, and wherein the method further comprises using the primary controller to control the one or both of the voltage of the bus and the power output by the energy supply, based on the setpoint output by the secondary controller.

Embodiment 16: The method of Embodiment 15, wherein the secondary controller outputs the setpoint to a voltage control module of the primary controller.

Embodiment 17: A controller for an energy supply, the controller configured to: determine a voltage-control value based on a first error between a reference parameter of a bus to which the energy supply is electrically connected and a measured parameter of the bus; determine a load-share value based on a second error between a reference power of the energy supply and a measured power output by the energy supply; determine a setpoint based on the voltage-control value and the load-share value; and output the setpoint to control one or both of a voltage of the bus and a power output by the energy supply, according to the setpoint.

Embodiment 18: The controller of Embodiment 17, wherein the controller is a secondary controller configured to output the setpoint to a voltage control module of a primary controller in a direct current (DC)/DC converter of the energy supply.

Embodiment 19: The controller of either one of Embodiments 17 or 18, wherein the energy supply is a battery energy storage system or power generator within a microgrid.

Embodiment 20: The controller of any one of Embodiments 17 through 19, wherein the voltage-control value is a first voltage value, the reference parameter is a reference voltage of the bus, and the measured parameter is a measured voltage at the bus, wherein the first error is calculated as a difference between a sum of the reference voltage with an estimated voltage drop on an electrical line between the bus and the energy supply, and the measured voltage, wherein the load-share value is a second voltage value, wherein the second error is calculated as a difference between a sum of the reference power with an estimated power loss on the electrical line, and the measured power, and wherein the controller is further configured to convert the second error from a power value to a voltage value.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1.  A method of controlling an energy supply, the method comprising using a controller of the energy supply to:

    determine a voltage-control value based on a first error between a reference parameter of a bus to which the energy supply is electrically connected and a measured parameter of the bus;

determine a load-share value based on a second error between a reference power of the energy supply and a measured power output by the energy supply;

determine a setpoint based on the voltage-control value and the load-share value; and

output the setpoint to control one or both of a voltage of the bus and a power output by the energy supply, according to the setpoint.

2. The method of Claim 1, wherein the voltage-control value is a first voltage value, the reference parameter is a reference voltage of the bus, and the measured parameter is a measured voltage at the bus.

3. The method of Claim 2, further comprising using the at least one controller to calculate the first error based on a difference between the reference voltage and the measured voltage.

4. The method of Claim 3, wherein the first error is further calculated based on an estimated voltage drop on an electrical line between the bus and the energy supply.

5. The method of Claim 4, further comprising using the controller to estimate the voltage drop based on an estimated resistance on the electrical line and current output by the energy supply.

6. The method of Claim 1, wherein the load-share value is a second voltage value, and wherein the method further comprises using the controller to convert the second error from a power value to a voltage value.

7. The method of Claim 6, further comprising using the controller to calculate the second error based on a difference between the reference power and the measured power.

8. The method of Claim 7, wherein the second error is further calculated based on an estimated power loss on an electrical line between the bus and the energy supply.

9. The method of Claim 6, wherein the second error is converted from the power value to the voltage value based on a droop coefficient associated with a direct current (DC)/DC converter of the energy supply.

10. The method of Claim 1, wherein the setpoint is a voltage setpoint.

11. The method of Claim 1, wherein the setpoint is determined as a sum of the voltage-control value and the load-share value.

12. The method of Claim 1, further comprising using the controller to calculate the reference power as a proportion of a total load based on a nominal power of the energy supply relative to nominal power of one or more other energy supplies.

13. The method of Claim 1, wherein the energy supply is a battery energy storage system.

14. The method of Claim 1, wherein the energy supply is a power generator.

15. The method of Claim 1, wherein the controller is a secondary controller, wherein the setpoint is output by the secondary controller to an input to a primary controller of the energy supply, and wherein the method further comprises using the primary controller to control the one or both of the voltage of the bus and the power output by the energy supply, based on the setpoint output by the secondary controller.

16. The method of Claim 15, wherein the secondary controller outputs the setpoint to a voltage control module of the primary controller.

17. A controller for an energy supply, the controller configured to:

determine a voltage-control value based on a first error between a reference parameter of a bus to which the energy supply is electrically connected and a measured parameter of the bus;

determine a load-share value based on a second error between a reference power of the energy supply and a measured power output by the energy supply;

determine a setpoint based on the voltage-control value and the load-share value; and

output the setpoint to control one or both of a voltage of the bus and a power output by the energy supply, according to the setpoint.

18. The controller of Claim 17, wherein the controller is a secondary controller configured to output the setpoint to a voltage control module of a primary controller in a direct current (DC)/DC converter of the energy supply.

19. The controller of Claim 18, wherein the energy supply is a battery energy storage system or power generator within a microgrid.

20. The controller of Claim 17,

wherein the voltage-control value is a first voltage value, the reference parameter is a reference voltage of the bus, and the measured parameter is a measured voltage at the bus,
wherein the first error is calculated as a difference between a sum of the reference voltage with an estimated voltage drop on an electrical line between the bus and the energy supply, and the measured voltage,
wherein the load-share value is a second voltage value,
wherein the second error is calculated as a difference between a sum of the reference power with an estimated power loss on the electrical line, and the measured power, and
wherein the controller is further configured to convert the second error from a power value to a voltage value.

**FIG. 1**

**200**

```
        ┌─────────────┐
        │    START    │
        └─────────────┘
          │         │
    ┌─────┘         └─────┐
    ▼                     ▼
┌──────────────────┐  ┌──────────────────┐
│ Determine        │  │ Determine        │
│ voltage-control  │  │ load-share value │
│ value            │  │ 220              │
│ 210              │  │                  │
└──────────────────┘  └──────────────────┘
    │                     │
    └──────────┬──────────┘
               ▼
    ┌────────────────────────┐
    │ Determine setpoint     │
    │ based on voltage-      │
    │ control value and      │
    │ load-share value       │
    │ 230                    │
    └────────────────────────┘
               │
               ▼
    ┌────────────────────────┐
    │ Output setpoint        │
    │ 240                    │
    └────────────────────────┘
               │
               ▼
        ┌─────────────┐
        │     END     │
        └─────────────┘
```

**FIG. 2**

**FIG. 3**

**400**

Processor
410

Main Memory
415

Secondary Memory
420

I/O Interface
435

Communication
Interface 440

455

External System
445

450

Communication Bus
405

**FIG. 4**

**FIG. 5**

**FIG. 6A**

**FIG. 6B**

**FIG. 7**

Europäisches
Patentamt

European
Patent Office

Office européen
des brevets

# EUROPEAN SEARCH REPORT

**Application Number**

EP 23 16 8054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 377 687 A (UNIV TSINGHUA; SHENZHEN POWER SUPPLY BUREAU) 25 February 2015 (2015-02-25) | 1-3,6,7, 9-12,14, 17 | INV. H02J1/10 H02J1/14 |
| Y | * figure 2 * | 4,5 | |
| X | CN 107 516 888 A (BEIJING ZHIZHONG ENERGY INTERNET RES INSTITUTE CO LTD ET AL.) 26 December 2017 (2017-12-26) | 1-3,6,7, 9-12,14, 17 | |
| Y | * figure 2 * | 4,5 | |
| X | GADDE PHANI HARSHA ET AL: "An AC/DC hybrid campus microgrid: Modelling, control and financial analysis", 2021 IEEE 12TH INTERNATIONAL SYMPOSIUM ON POWER ELECTRONICS FOR DISTRIBUTED GENERATION SYSTEMS (PEDG), IEEE, 28 June 2021 (2021-06-28), pages 1-7, XP033949198, DOI: 10.1109/PEDG51384.2021.9494161 [retrieved on 2021-07-21] * figure 4 * | 1,13,17 | |
| | | | TECHNICAL FIELDS SEARCHED (IPC) |
| X | WO 2018/201224 A1 (ZUBIETA LUIS [CA]) 8 November 2018 (2018-11-08) * pages 1-7; figures 2,3 * | 1,17 | H02J |
| A | US 2019/207517 A1 (KARLSSON MAGNUS [SE] ET AL) 4 July 2019 (2019-07-04) * paragraphs [0001], [0007], [0011] * | 1-20 | |
| Y | CN 106 885 944 A (UNIV SHANGHAI ELECTRIC POWER) 23 June 2017 (2017-06-23) * paragraphs [0001] - [0012] * | 4,5 | |

The present search report has been drawn up for all claims

| Place of search | Date of completion of the search | Examiner |
|---|---|---|
| Munich | 16 October 2023 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8054

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2023

| Patent document cited in search report | | Publication date | Patent family member(s) | | Publication date |
|---|---|---|---|---|---|
| CN 104377687 | A | 25-02-2015 | NONE | | |
| CN 107516888 | A | 26-12-2017 | NONE | | |
| WO 2018201224 | A1 | 08-11-2018 | CA | 3062352 A1 | 08-11-2018 |
| | | | US | 2020169083 A1 | 28-05-2020 |
| | | | US | 2022302700 A1 | 22-09-2022 |
| | | | WO | 2018201224 A1 | 08-11-2018 |
| US 2019207517 | A1 | 04-07-2019 | EP | 3443652 A1 | 20-02-2019 |
| | | | US | 2019207517 A1 | 04-07-2019 |
| | | | WO | 2017178035 A1 | 19-10-2017 |
| CN 106885944 | A | 23-06-2017 | NONE | | |

EPO FORM P0459

For more details about this annex : see Official Journal of the European Patent Office, No. 12/82